# FASCICULE DE BREVET EUROPEEN

(11) **EP 0 801 088 B1**
(45) Date de publication et mention de la délivrance du brevet: **26.06.2002**
(21) Numéro de dépôt: 97400588.6
(22) Date de dépôt: 17.03.1997
(51) Int. Cl.: C08G 18/42, C08G 63/668

(54) **Polyester polyol, mousse de polyuréthane obtenue à partir dudit polyester polyol et son utilisation**
Polyesterpolyol, aus diesem Polyesterpolyol hergestellter Polyurethan-Schaumstoff sowie seine Verwendung
Polyesterpolyol, polyurethane foam obtained from this polyesterpolyol and its use

(30) Priorité: 12.04.1996 FR 9604582
(43) Date de publication de la demande: 15.10.1997
(73) Titulaire: WITCO, 75008 Paris (FR)
(72) Inventeur: Ghesquiere, Denis, 27370 Tourville La Campagne (FR)
(74) Mandataire: Peuscet, Jacques

(56) Documents cités:
- EP-A- 0 124 071

## Description

La présente invention concerne un polyester polyol, la mousse de polyuréthane obtenue à partir dudit polyester polyol et son utilisation dans le domaine de l'industrie automobile.

La présente invention concerne un polyester polyol, qui permet de préparer, par réaction avec un polyisocyanate en présence d'un agent d'expansion, des mousses souples de polyuréthane ne donnant pas lieu à la formation de brouillard ou "fogging" dans les véhicules de transport à l'intérieur desquels ces mousses sont utilisées.

Il est connu par l'article de J. SOLER et col. "Polyurethanes World Congress" 1993 October 10-13, pages 552-557 et par EP-A-0 628 583, que le phénomène de "fogging" est essentiellement dû à des polyesters cycliques volatils, qui se forment lors de la préparation du polyester polyol, qui ne réagissent pas avec les isocyanates lors de la fabrication des polyuréthanes et qui s'évaporent au cours du temps à partir des mousses de polyuréthane utilisées à l'intérieur d'un véhicule et se condensent sur les parois froides du véhicule, notamment le pare-brise. Dans les mousses généralement commercialisées, où le polyester polyol est un poly(adipate de diéthylèneglycol), ce produit de condensation cyclique volatil fond à une température d'environ 80°C à la pression atmosphérique, se sublime facilement et a pour formule :

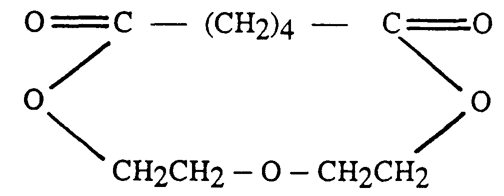

Dans WO-A-95/14050, il est indiqué que les polyesters cycliques, qui participent au fogging, sont principalement ceux dont les cycles comportent de 12 à 14 atomes.

Pour éviter la formation du "fogging", on a déjà proposé de choisir le polyol et/ou l'acide utilisés pour la fabrication du polyester polyol, de façon soit à empêcher la formation de produits cycliques comportant des cycles ayant de 12 à 14 atomes, soit à empêcher la formation de tout produit cyclique. Par exemple, selon EP-A-0 601 470, on a proposé d'utiliser, comme polyol, avec l'acide adipique un mélange d'alcanediol(s) et d'étherdiol(s), l'étherdiol ayant pour formule globale : 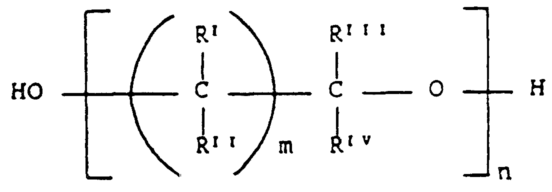 où R_{I}, R_{II}, R_{III}, R_{IV} sont indépendamment des radicaux H et/ou alkyle en C₁ à C₄, m est un nombre quelconque compris entre 1 et 3 et n est un nombre quelconque supérieur ou égal à 3. Selon WO-A-95/14050, on a proposé ou bien de combiner le diéthylèneglycol avec un acide autre que l'acide adipique : acide succinique, azélaïque, dodécanoïque ou acide dimère d'acide gras, ou bien de combiner l'acide adipique avec l'éthylèneglycol, le pentaérythritol ou un polyéthylèneglycol.

Par ailleurs, il est connu d'utiliser pour la fabrication des polyester polyols, des polyols ayant une fonctionnalité supérieure ou égale à 3 pour obtenir dans le polyester polyol un certain degré de ramification et de réticulation.

Les polyester polyols proposés dans l'état de la technique ci-dessus mentionné permettent, certes, de préparer des mousses de polyuréthane ne présentant pas ou présentant peu de fogging, mais, malheureusement, ils n'ont généralement pas les propriétés physiques requises pour préparer des mousses de polyuréthane dans les conditions industrielles couramment utilisées. Au surplus, les mousses de polyuréthane obtenues peuvent ne pas avoir les propriétés requises pour leur utilisation.

Le but de la présente invention est de proposer un polyester polyol, qui permette à la fois d'obtenir des mousses de polyuréthane ne provoquant pas de fogging et d'obtenir, dans les conditions industrielles généralement utilisées pour la fabrication de celles-ci, des mousses ayant les propriétés requises pour leur utilisation, notamment dans les habitacles de véhicules automobiles.

La présente invention a donc pour objet un polyester polyol susceptible d'être obtenu par réaction d'un réactif acide A comprenant au moins un polyacide aliphatique ou aromatique avec un premier réactif hydroxylé P2 constitué d'au moins un polyol de fonctionnalité au moins égale à 2 et un deuxième réactif hydroxylé P3 constitué d'au moins un polyol de fonctionnalité au moins égale à 3, caractérisé par le fait que le premier réactif hydroxylé P2 comprend du monoéthylèneglycol et que le deuxième réactif hydroxylé P3 comprend au moins un polyol de fonctionnalité au moins égale à 3 oxyalkyléné avec un oxyde d'alkylène en C₂-C₄.

L'utilisation, selon l'invention, d'un mélange de polyols contenant d'une part, du monoéthylèneglycol et d'autre part, au moins un polyol de fonctionnalité au moins égale à 3 oxyalkyléné avec un oxyde d'alkylène en C₂-C₄ permet d'éviter la formation de polyesters cycliques volatils, même lorsque l'acide utilisé est de l'acide adipique et, par conséquent, permet d'éviter la formation de fogging.

Selon un mode de réalisation préféré de la présente invention, le premier réactif hydroxylé P2 comprend, en plus du monoéthylèneglycol, au moins un diol branché.

L'addition de ce diol branché a l'avantage de permettre de moduler les propriétés physiques du polyester polyol obtenu et, par conséquent, de la mousse de polyuréthane éventuellement préparée à l'aide dudit polyester polyol.

Le diol branché associé au monoéthylèneglycol a avantageusement pour formule : 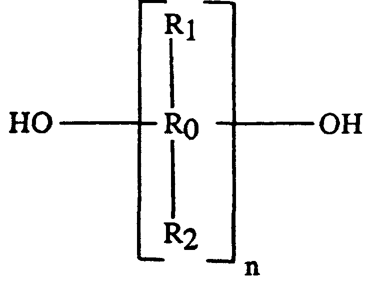 formule dans laquelle :
- R₀ représente, indépendamment dans chaque motif [R₁R₀R₂], un atome de carbone, un radical alicyclique en C₆, un radical phényle ou un radical hétérocyclique comportant 4 à 6 atomes, saturé ou non, l'hétéroatome étant O ou N;
- R₁ et R₂ représentent, indépendamment dans chaque motif [R₁R₀R₂] et indépendamment l'un de l'autre, un atome d'hydrogène, un radical alkyle linéaire en C₁-C₆, un radical branché en C₃-C₆, un radical alicyclique en C₆ ou un radical aryle ;
- sous réserve que, si R₀ n'est un cycle dans aucun des motifs [R₁R₀R₂], R₁ et/ou R₂ est différent de H dans au moins un des motifs [R₁R₀R₂] ;
- n est un entier compris entre 1 et 8 (bornes incluses) sous réserve que, si n est supérieur à 4, le nombre des atomes de carbone dans l'ensemble des radicaux R₀, R₁, R₂ soit au total supérieur à 8.

Dans la formule ci-dessus, le radical R₀ peut être un atome de carbone ou un radical cyclique. De préférence, dans au moins un des motifs [R₁R₀R₂], R₀ est un atome de carbone. Lorsque R₀ est un radical cyclique, R₀ est, de préférence, un radical hexyle, phényle ou furfuryle. R₁ et R₂ représentent, de préférence, un atome d'hydrogène ou un radical alkyle, linéaire ou ramifié, plus particulièrement méthyle, éthyle, propyle, isopropyle, butyle ou isobutyle.

Le diol branché est, de préférence, choisi dans le groupe formé par le propanediol-1,2, le méthyl-2 propanediol-1-3, le diméthyl-2,2 propanediol-1,3, l'éthyl-2 butyl-2 propanediol-1,3, le triméthyl-2,2,4 hexanediol-1,6, le triméthyl-2,2,4 pentanediol-1,3, le butanediol-1,2 et le butanediol 1,3, le pentanediol-1,2, l'éthyl-2 hexanediol-1,3, le méthyl-2 octanediol-1,8, le bis-phénol A et le bis-phénol F.

Le premier réactif hydroxylé P2 peut, éventuellement, également contenir du diéthylèneglycol. Cependant, la proportion de diéthylèneglycol introduite ne doit pas engendrer un fogging, qui soit considéré comme inacceptable dans les conditions d'utilisation de la mousse de polyuréthane préparée à partir du polyester polyol ; cette condition est réalisée lorsque le diéthylèneglycol est présent en une proportion molaire inférieure à 20 % de l'ensemble des réactifs hydroxylés (P2) et (P3).

De préférence, la proportion molaire du (ou des) diol(s) branché(s) par rapport à l'(aux) autre(s) polyol(s) du premier réactif hydroxylé P2 est comprise entre 5/95 et 1/1.

Le polyol oxyalkyléné constituant le deuxième réactif hydroxylé P3 est avantageusement obtenu à partir d'un polyol choisi dans le groupe formé par le triméthylol éthane, le triméthylol propane, le di-triméthylol propane, le pentaérythritol, le di-pentaérythritol, le glycérol, la triéthanolamine, la triisopropanolamine, l'hexanetriol-1,2,6, le butanetriol-1,2,4 et le tri(2-hydroxyéthyl)isocyanurate.

L'oxyalkylation est effectuée à l'aide d'un oxyde d'alkylène en C₂-C₄ ou d'un mélange de ceux-ci. Cette oxyalkylation est, de préférence, effectuée avec l'oxyde d'éthylène et/ou l'oxyde de propylène.

Le polyol oxyalkyléné du deuxième réactif hydroxylé P3 comporte, avantageusement, un nombre N d'unités d'oxyde(s) d'alkylène fixée(s) égal à fx, f étant le nombre de fonctions OH par mole de polyol du réactif P3 et x étant un nombre quelconque compris entre 1 et 10, de préférence au moins égal à 2 et au plus égal à 6.

Selon l'invention, la proportion molaire du deuxième réactif hydroxylé P3 par rapport au premier réactif hydroxylé P2 est avantageusement comprise entre 1/99 et 1/1, de préférence entre 2/98 et 10/90.

Le réactif acide A est constitué par au moins un polyacide aliphatique ou aromatique. On utilise, de préférence, au moins un diacide, les diacides préférés étant l'acide adipique et l'anhydride phtalique ; l'acide adipique est tout particulièrement préféré.

Selon un mode de réalisation avantageux, le réactif acide A comprend, en plus d'au moins un diacide aliphatique ou aromatique, au moins un acide ramifié de fonctionnalité supérieure ou égale à 2. L'addition de l'acide ramifié permet, comme l'addition du glycol branché, d'ajuster les propriétés physiques des polyester polyols obtenus. Cet acide ramifié est plus particulièrement un dimère d'un acide gras non saturé, en particulier en C₁₂-C₂₄. L'acide gras non saturé est plus particulièrement un acide gras en C₁₈ ; on met en oeuvre avantageusement un mélange de mono-, di- et trimère d'acide gras en C₁₈ contenant au moins 70 % en poids de dimère, qui est disponible dans le commerce.

Dans ce mode de réalisation préféré, la proportion molaire du (ou des) diacide(s) par rapport à l'(aux) acide(s) ramifié(s) est avantageusement comprise entre 95/5 et 1/1.

La quantité totale des réactifs hydroxylés P2 et P3 que l'on fait réagir avec le réactif acide A est, de façon connue, supérieure à la quantité stoechiométrique, de façon que l'on obtienne un polyester polyol comportant au moins 2 groupes hydroxyle libres.

Selon l'invention, on prépare le polyol oxyalkyléné de fonctionnalité au moins égale à 3 avant introduction dans le mélange réactionnel par tout procédé connu de condensation d'un polyol et d'un oxyde d'alkylène, en particulier en présence d'un catalyseur tel que l'hydroxyde de sodium. Il n'est pas possible de préparer ce polyol oxyalkyléné in situ dans le mélange réactionnel.

Le polyester polyol est ensuite obtenu, de façon connue, en faisant réagir les réactifs hydroxylés P2 et P3 par condensation en masse avec le réactif acide A, sous atmosphère inerte, à une température généralement comprise entre 160 et 250°C, en présence d'un catalyseur métallique ou organométallique approprié.

La mousse de polyuréthane peut ensuite être préparée par tout procédé classique connu de l'homme de métier, par réaction d'au moins un polyisocyanate et du polyester polyol selon l'invention, seul ou en mélange avec d'autres agents réactifs usuels, tels que des polyéthers, des polycaprolactones et des polyamides, en présence d'un catalyseur et d'un agent d'expansion et, éventuellement, en présence d'un agent de réticulation ou d'un allongeur de chaîne et/ou d'autres additifs connus.

Le polyisocyanate utilisé peut être un polyisocyanate aromatique, aliphatique, cycloaliphatique ou hétérocyclique. On préfère généralement les polyisocyanates aisément accessibles commercialement tels que les 2,4- et 2,6-toluylène diisocyanates (TDI) ainsi que leurs mélanges, les diphénylméthanediisocyanates (MDI) ou les prépolymères résultant de la réaction partielle des polyisocyanates avec un composé hydroxylé, tels que ceux décrits dans J. H. Saunders, K. C. Frisch, High Polymers, 1964, Vol. 26, ouvrage "Polyurethanes Chemistry and Technology", édité par "Interscience Publishers".

On peut ajouter au mélange réactionnel des agents de réticulation ou de prolongation de chaîne comportant au moins deux atomes d'hydrogène susceptibles de réagir avec les isocyanates et ayant une masse moléculaire inférieure à 500. Ces agents de réticulation sont, par exemple, des composés comportant des groupes hydroxyle et/ou amino et/ou carboxyle.

Comme agent d'expansion, on peut utiliser l'eau éventuellement mélangée à un agent tensioactif et/ou des composés organiques à bas point de fusion.

La préparation des mousses de polyuréthane est décrite en détail dans G. Woods, 1982, "Flexible Polyurethane Foams Chemistry and Technology", édité par "Applied Science Publishers".

D'autres additifs peuvent également être introduits de façon connue, tels que des agents émulsionnants, des agents de stabilisation des mousses, des agents ignifugeants, des pigments, des colorants, des charges, des stabilisants contre le vieillissement ou des substances ayant une action fongistatique et bactériostatique.

La présente invention a donc également pour objet une mousse de polyuréthane obtenue par réaction d'au moins un polyisocyanate avec au moins un polyester polyol, caractérisée par le fait qu'elle est obtenue en mettant en oeuvre au moins un polyester polyol selon l'invention, tel que ci-dessus défini.

L'invention a enfin pour objet l'utilisation d'une mousse de polyuréthane telle que ci-dessus définie pour la réalisation d'éléments destinés à équiper l'habitacle d'un véhicule automobile.

On va donner ci-après, à titre purement illustratif et non limitatif, plusieurs exemples de mise en oeuvre de l'invention.

### EXEMPLES :

### A) Préparation de triméthylol propane (TMP) et de triéthanolamine (TEA) polyéthoxylés

1) On introduit 800 g de triméthylol propane et 5 g d'une solution aqueuse d'hydroxyde de sodium à 50 % en poids dans un réacteur susceptible de travailler sous pression. L'atmosphère et le contenu du réacteur sont déshydratés et inertés à l'azote à 140°C ; le réacteur est fermé et on introduit progressivement de l'oxyde d'éthylène en maintenant la température à 150-160°C et la pression dans le réacteur à, au plus, 3 x 10⁵ Pa : cette alimentation est poursuivie jusqu'à introduction de 3 160 g d'oxyde d'éthylène. Le mélange réactionnel est maintenu pendant 30 minutes en température, puis refroidi avant mise à l'air du réacteur. On obtient ainsi un polyol contenant 12 moles d'oxyde d'éthylène par mole de triméthylol propane. Ce polyol a un indice d'hydroxyle (IOH) de 250 mg KOH/g et sera désigné par la suite par "TMP 12 OE".
2) On a également préparé un polyol contenant 6 moles d'oxyde d'éthylène par mole de triméthylol propane (TMP 6 OE) en opérant comme dans le paragraphe A 1) ci-dessus, sauf que l'on introduit 1 580 g d'oxyde d'éthylène dans le réacteur. L'indice d'hydroxyle du polyol obtenu est de 415 mg KOH/g.
3) On a également préparé un polyol contenant 18 moles d'oxyde d'éthylène par mole de triméthylol propane (TMP 18 OE) en opérant comme dans le paragraphe A.1), sauf que l'on introduit 650 g de triméthylol propane et 3 850 g d'oxyde d'éthylène. L'indice d'hydroxyle du polyol obtenu est de 180 mg KOH/g.
4) On a préparé de la même façon un polyol contenant 12 molécules d'oxyde d'éthylène par mole de triéthanolamine (TEA 12 OE) en faisant réagir 900 g de triéthanolamine (TEA) avec 3 850 g d'oxyde d'éthylène. L'indice d'hydroxyle du polyol obtenu est de 245 mg KOH/g.

### B) Préparation de polyester polyol

### 1) Préparation de polyadipate de monoéthylèneglycol et de TMP 12 OE (composé B1)

Dans un réacteur d'estérification muni d'une colonne de fractionnement, on a introduit de l'acide adipique ainsi que du monoéthylèneglycol et du TMP 12 OE dans un rapport molaire 94/6. On chauffe sous agitation jusqu'à 220-230°C sous atmosphère inerte en présence, comme catalyseur, de 40 ppm de "FOMREZ SUL 11A" commercialisé par la société "WITCO" (ce catalyseur est un dérivé d'étain). La réaction est poursuivie jusqu'aux valeurs prédéfinies d'IA et d'IOH.

### 2) On a préparé dans les mêmes conditions les polyester polyols B2 à B13 (voir tableau I).

Le tableau I ci-après indique les formulations mises en oeuvre pour aboutir aux polyester polyols B1 à B13 et les propriétés desdits polyester polyols, à savoir : l'indice d'hydroxyle (IOH) en mg de KOH par gramme, l'indice d'acide (IA) en mg de KOH par gramme, la viscosité à 40°C et l'aspect à 25°C.

### C) Préparation d'une mousse de polyuréthane à partir des polyester polyols B1 à B13

On mélange à la main un des polyester polyols B1 à B13 avec un polyisocyanate. Le polyisocyanate utilisé est le toluylène diisocyanate (ci-après TDI) obtenu par mélange 50/50 (en poids) de TDI 80/20 et de TDI 65/35 (les deux nombres indiquent la proportion d'isomères TDI 2,4 et TDI 2,6); le polyisocyanate est mis en oeuvre en quantité stoechiométrique suffisante pour réagir avec tous les autres composants réactifs vis-à-vis des isocyanates ; cette réaction est effectuée en présence d'eau, d'un catalyseur et d'un tensioactif (à savoir le produit commercialisé par la société "WITCO" sous la dénomination "FOMREZ M 6682 A").

La formulation de la mousse est la suivante :
- Polyester polyol 100
- Eau 3,8
- "FOMREZ M 6682A" 1,0
- Dibutylbenzylamine 0,8 à 1,3
- TDI 72/28 index 100

L'index 100 du TDI correspond à la quantité stoechiométrique suffisante pour réagir avec tous les autres composants réactifs vis-à-vis des isocyanates.

On a ensuite mesuré les propriétés de la mousse obtenue : densité, nombre de cellules par cm et "fogging". Les résultats sont donnés dans le tableau I ci-après.

On a comparé les résultats obtenus avec ceux d'une mousse standard "FOMREZ 60 LV" préparée à partir de polyadipate de diéthylèneglycol et commercialisée par la société "WITCO".

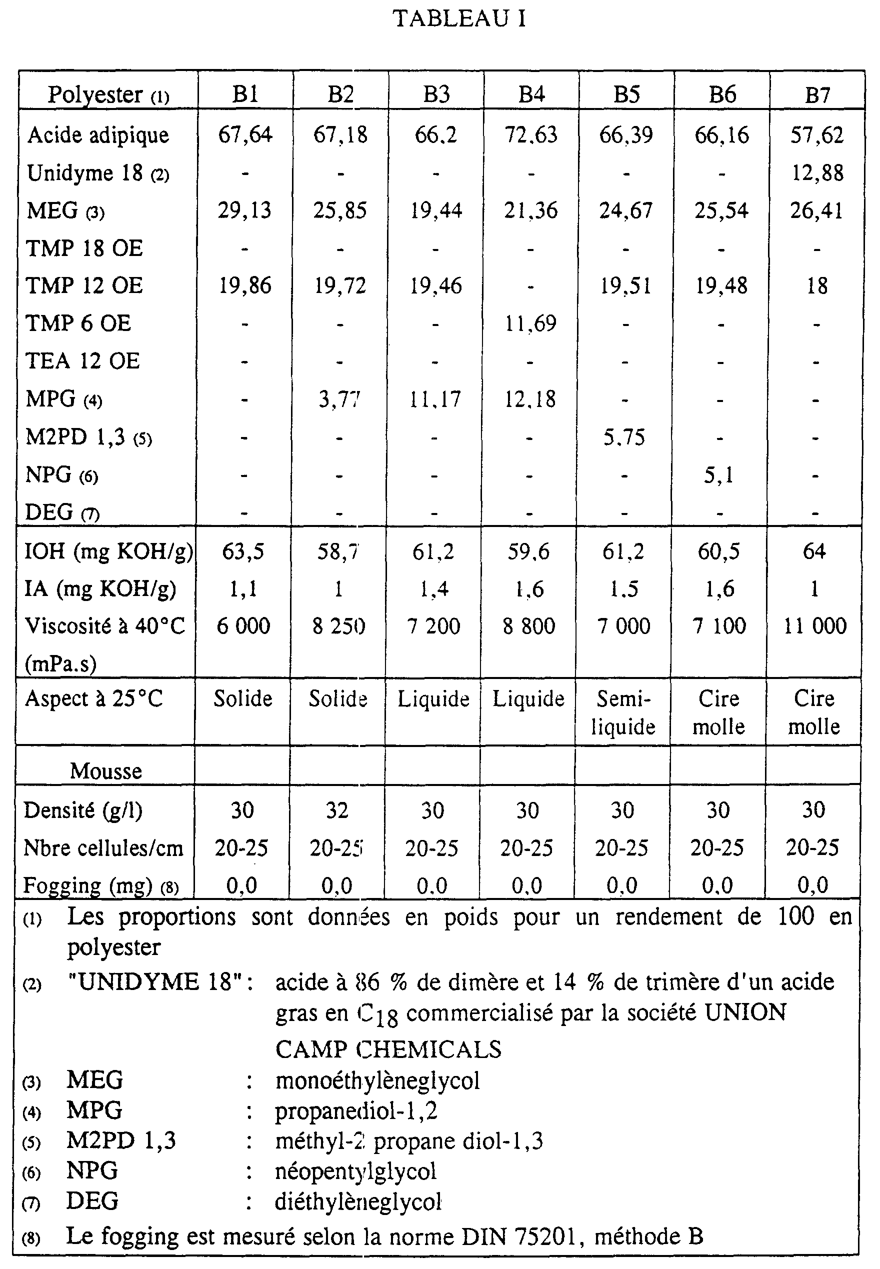

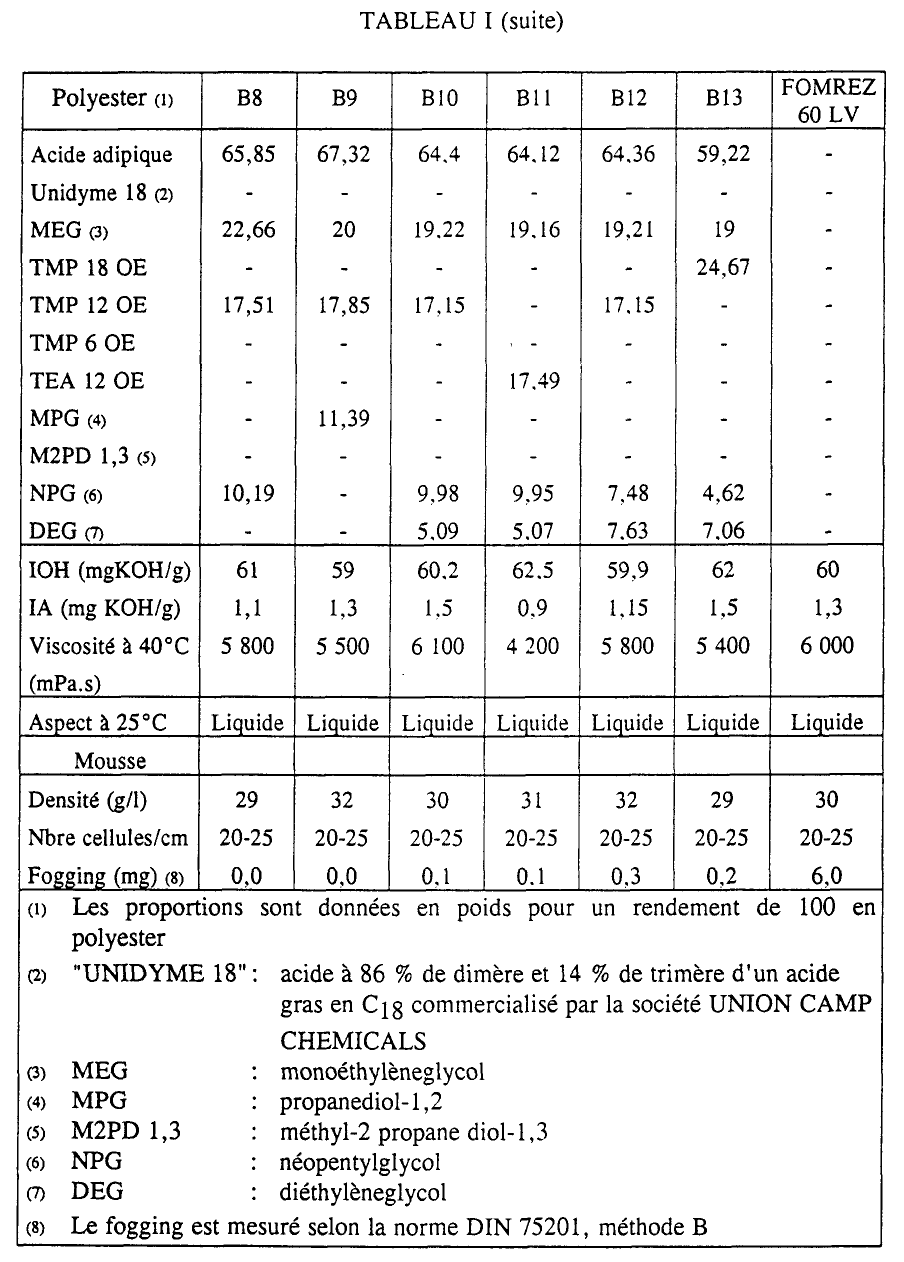

## Revendications

1. Polyester polyol susceptible d'être obtenu par réaction d'un réactif acide (A) comprenant au moins un polyacide aliphatique ou aromatique avec un premier réactif hydroxylé (P2) constitué d'au moins un polyol de fonctionnalité égale à 2 et un deuxième réactif hydroxylé (P3) constitué d'au moins un polyol de fonctionnalité au moins égale à 3, **caractérisé par le fait que** le premier réactif hydroxylé (P2) comprend du monoéthylèneglycol et que le deuxième réactif hydroxylé (P3) comprend au moins un polyol de fonctionnalité au moins égale à 3 oxyalkyléné avec un oxyde d'alkylène en C₂-C₄.

2. Polyester polyol selon la revendication 1, **caractérisé par le fait que** le premier réactif hydroxylé (P2) comprend aussi au moins un diol branché de formule 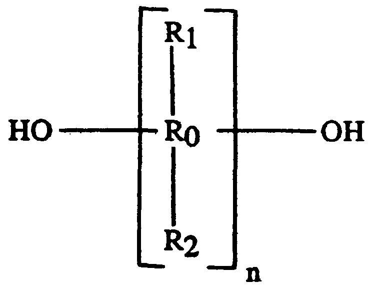 formule dans laquelle :
- R₀ représente, indépendamment dans chaque motif [R₁R₀R₂], un atome de carbone, un radical alicyclique en C₆, un radical phényle ou un radical hétérocyclique comportant 4 à 6 atomes, saturé ou non, l'hétéroatome étant O ou N;
- R₁ et R₂ représentent, indépendamment dans chaque motif [R₁R₀R₂] et indépendamment l'un de l'autre, un atome d'hydrogène, un radical alkyle linéaire en C₁-C₆, un radical alkyle branché en C₃-C₆, un radical alicyclique en C₆ ou un radical aryle ;
- sous réserve que, si R₀ n'est un cycle dans aucun des motifs [R₁R₀R₂], R₁ et/ou R₂ est différent de H dans au moins un des motifs [R₁R₀R₂] ;
- n est un entier compris entre 1 et 8 (bornes incluses) sous réserve que, si n est supérieur à 4, le nombre des atomes de carbone dans l'ensemble des radicaux R₀, R₁, R₂ soit au total supérieur à 8.

3. Polyester polyol selon la revendication 2, **caractérisé par le fait que** le diol branché est choisi dans le groupe formé par le propanediol-1,2, le méthyl-2 propanediol-1,3, le diméthyl-2,2 propanediol-1,3, l'éthyl-2 butyl-2 propanediol-1,3, le triméthyl-2,2,4 hexanediol-1,6, le triméthyl-2,2,4 pentanediol-1,3, le butanediol-1,2 et le butanediol-1,3, le pentanediol-1,2, l'éthyl-2 hexanediol-1,3, le méthyl-2 octanediol-1,8, le bis-phénol A et le bis-phénol F.

4. Polyester polyol selon l'une des revendications 1 à 3, **caractérisé par le fait que** le réactif hydroxylé (P2) comprend du diéthylèneglycol, ledit diéthylèneglycol étant présent en une proportion molaire inférieure à 20 % de l'ensemble des réactifs hydroxylés (P2) et (P3).

5. Polyester polyol selon l'une des revendications 1 à 4, **caractérisé par le fait que** le réactif acide (A) comprend au moins un diacide et au moins un acide ramifié à fonctionalité supérieure ou égale à 2.

6. Polyester polyol selon la revendication 5, **caractérisé par le fait que** le réactif acide (A) comprend, comme acide ramifié, au moins un dimère d'acide gras en C₁₂-C₂₄.

7. Polyester polyol selon la revendication 6, **caractérisé par le fait que** le réactif acide (A) comprend, comme acide ramifié, au moins un dimère d'acide gras en C₁₈.

8. Polyester polyol selon la revendication 7, **caractérisé par le fait que** le réactif acide (A) comprend, comme source d'acide ramifié, un mélange de mono-, di- et trimère d'acide gras en C₁₈ contenant au moins 70% en poids de dimère.

9. Polyester polyol selon l'une des revendications 1 à 8, **caractérisé par le fait que** le réactif acide (A) comprend de l'acide adipique et/ou de l'anhydride phtalique.

10. Polyester polyol selon l'une des revendications 1 à 9, **caractérisé par le fait que** le polyol oxyalkyléné est obtenu à partir d'un polyol choisi dans le groupe formé par le triméthylol éthane, le triméthylol propane, le di-triméthylol propane, le pentaérythritol, le di-pentaérythritol, le glycérol, la triéthanolamine, la triisopropanolamine, l'hexanetriol-1,2,6, le butanetriol-1,2,4 et le tri(2-hydroxy éthyl)isocyanurate.

11. Polyester polyol selon l'une des revendications 1 à 10, **caractérisé par le fait que** le polyol oxyalkyléné est obtenu par oxyalkylation avec de l'oxyde d'éthylène et/ou de l'oxyde de propylène.

12. Polyester polyol selon l'une des revendications 1 à 11, **caractérisé par le fait que** la proportion molaire du deuxième réactif hydroxylé (P3) par rapport au premier réactif hydroxylé (P2) est comprise entre 1/99 et 1/1.

13. Polyester polyol selon la revendication 2, prise seule ou en combinaison avec l'une des revendications 3 à 11, **caractérisé par le fait que** la proportion molaire du (ou des) diol(s) branché(s) par rapport à l'(aux) autre(s) polyol(s) du premier réactif hydroxylé (P2) est comprise entre 5/95 et 1/1.

14. Polyester polyol selon la revendication 5, prise seule ou en combinaison avec l'une des revendications 2, 3 et 6 à 13, **caractérisé par le fait que** la proportion molaire du (ou des) diacide(s) par rapport à l'(aux) acide(s) ramifié(s) est comprise entre 95/5 et 1/1.

15. Polyester polyol selon l'une des revendications 1 à 14, **caractérisé par le fait qu'**un polyol polyalkyléné du deuxième réactif hydroxylé (P3) comporte un nombre N d'unités d'oxyde(s) d'alkylène fixées égal à fx, f étant le nombre de fonctions OH par mole de polyol et x étant un nombre compris entre 1 et 10.

16. Mousse de polyuréthane obtenue par réaction d'au moins un polyisocyanate sur au moins un polyester polyol, **caractérisée par le fait qu'**elle est obtenue en mettant en oeuvre au moins un polyester polyol selon l'une des revendications 1 à 15.

17. Utilisation d'une mousse de polyuréthane selon la revendication 16 pour la réalisation d'éléments destinés à équiper l'habitacle d'un véhicule automobile.

## Patentansprüche

1. Polyesterpolyol erhältlich durch die Umsetzung eines sauren Reaktanden (A), der wenigstens eine aliphatische oder aromatische Polysäure umfasst, mit einem ersten Hydroxy-Reaktanden (P2), der wenigstens ein difunktionelles Polyol umfasst, und einem zweiten Hydroxy-Reaktanden (P3), der wenigstens ein mindestens trifunktionelles Polyol umfasst, **dadurch gekennzeichnet, dass** der erste Hydroxy-Reaktand (P2) Monoethylenglykol und der zweite Hydroxy-Reaktand (P3) wenigstens ein mindestens trifunktionelles mit einem C₂-C₄-Alkylenoxid alkoxyliertes Polyol umfasst.

2. Polyesterpolyol nach Anspruch 1, **dadurch gekennzeichnet, dass** der erste Hydroxy-Reaktand (P2) auch ein verzweigtes Diol der Formel 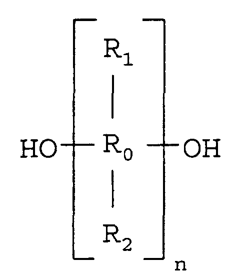 umfasst, worin
- R₀ in den Gruppen [R₁R₀R₂] jeweils unabhängig für ein Kohlenstoffatom, einen C₆-alicyclischen Rest, einen Phenylrest oder einen gesättigten oder ungesättigten heterocyclischen Rest mit 4 bis 6 Atomen steht, wobei die Heteroatome unter O oder N ausgewählt sind;
- R₁ und R₂ unabhängig voneinander in den Gruppen [R₁R₀R₂] jeweils unabhängig für ein Wasserstoffatom, einen linearen C₁-C₆-Alkylrest, einen verzweigten C₃-C₆-Alkylrest, einen C₆alicyclischen Rest oder einen Arylrest stehen;
- unter der Maßgabe dass, wenn R₀ in keiner der Gruppen [R₁R₀R₂] für einen Cyclus steht, R₁ und/oder R₂ in wenigstens einer der Gruppen [R₁R₀R₂] nicht für H stehen;
- n für eine ganze Zahl von 1 bis 8 (einschließlich der Grenzen) steht, unter der Maßgabe dass, wenn n größer als 4 ist, die Gesamtzahl der Kohlenstoffatome in allen Resten R_{0,} R₁ und R₂ größer als 8 ist.

3. Polyesterpolyol nach Anspruch 2, **dadurch gekennzeichnet, dass** das verzweigte Diol ausgewählt ist unter Propan-1,2-diol, 2-Methylpropan-1,3-diol, 2,2-Dimethylpropan-1,3-diol, 2-Ethyl-2-butylpropan-1,3-diol, 2,2,4-Trimethylhexan-1,6-diol, 2,2,4-Trimethylpentan-1,3-diol, Butan-1,2-diol und Butan-1,3-diol, Pentan-1,2-diol, 2-Ethylhexan-1,3-diol, 2-Methyloctan-1,8-diol, Bisphenol A und Bisphenol F.

4. Polyesterpolyol nach einem der Ansprüche 1 bis 3, **dadurch gekennzeichnet, dass** der Hydroxy-Reaktand (P2) Diethylenglykol umfasst, wobei das Diethylenglykol in einer Menge von weniger als 20 Mol-%, bezogen auf die Gesamtmenge der Hydroxy-Reaktanden (P2) und (P3), vorliegt.

5. Polyesterpolyol nach einem der Ansprüche 1 bis 4, **dadurch gekennzeichnet, dass** der saure Reaktand (A) wenigstens eine Disäure und wenigstens eine mindestens difunktionelle, verzweigte Säure umfasst.

6. Polyesterpolyol nach Anspruch 5, **dadurch gekennzeichnet, dass** der saure Reaktand (A) als verzweigte Säure mindestens ein Dimeres einer C₁₂-C₂₄-Fettsäure umfasst.

7. Polyesterpolyol nach Anspruch 6, **dadurch gekennzeichnet, dass** der saure Reaktand (A) als verzweigte Säure wenigstens ein Dimeres einer C₁₈-Fettsäure umfasst.

8. Polyesterpolyol nach Anspruch 7, **dadurch gekennzeichnet, dass** der saure Reaktand (A) als Quelle der verzweigten Säure ein Gemisch aus Mono-, Di- und Trimeren der C₁₈-Fettsäure, das wenigstens 70 Gew.-% Dimeres enthält, umfasst.

9. Polyesterpolyol nach einem der Ansprüche 1 bis 8, **dadurch gekennzeichnet, dass** der saure Reaktand (A) Adipinsäure und/oder Phthalsäureanhydrid umfasst.

10. Polyesterpolyol nach einem der Ansprüche 1 bis 9, **dadurch gekennzeichnet, dass** das alkoxylierte Polyol aus einem Polyol erhalten wird, dass ausgewählt ist unter Trimethylolethan, Trimethylolpropan, Di(trimethylolpropan), Pentaerythrit, Dipentaerythrit, Glycerin, Triethanolamin, Triisopropanolamin, Hexan-1,2,6-triol, Butan-1,2,4-triol und Tri(2-hydroxyethyl)-isocyanurat.

11. Polyesterpolyol nach einem der Ansprüche 1 bis 10, **dadurch gekennzeichnet, dass** das alkoxylierte Polyol durch Alkoxylierung mit Ethylenoxid und/oder Propylenoxid erhalten wird.

12. Polyesterpolyol nach einem der Ansprüche 1 bis 11, **dadurch gekennzeichnet, dass** das molare Verhältnis des zweiten Hydroxy-Reaktanden (P3) zum ersten Hydroxy-Reaktanden (P2) 1:99 bis 1:1 beträgt.

13. Polyesterpolyol nach Anspruch 2 alleine oder in Verbindung mit einem der Ansprüche 3 bis 11, **dadurch gekennzeichnet, dass** das molare Verhältnis des/der verzweigten Diols/Diole zum/zu den Poylol(en) des ersten Hydroxy-Reaktanden (P2) 5:95 bis 1:1 beträgt.

14. Polyesterpolyol nach Anspruch 5 alleine oder in Verbindung mit einem der Ansprüche 2, 3 und 6 bis 13, **dadurch gekennzeichnet, dass** das molare Verhältnis der Disäure(n) zu der/den verzweigten Säure(n) 95:5 bis 1:1 beträgt.

15. Polyesterpolyol nach einem der Ansprüche 1 bis 14, **dadurch gekennzeichnet, dass** das polyalkylenierte Polyol des zweiten Hydroxy-Reaktanden (P3) N = fx gebundene Alkylenoxideinheiten trägt, wobei f für die Anzahl der OH-Gruppen pro Mol Polyol und x für eine Zahl von 1 bis 10 steht.

16. Polyurethan-Schaumstoff, erhältlich durch die Umsetzung wenigstens eines Polyisocyanats mit wenigstens einem Polyesterpolyol, **dadurch gekennzeichnet, dass** man wenigstens ein Polyesterpolyol nach einem der vorhergehenden Ansprüche verwendet.

17. Verwendung eines Polyurethan-Schaumstoffs nach Anspruch 16 zur Herstellung von Elementen zur Ausstattung des Innenraums eines Kraftfahrzeugs.

## Claims

1. A polyesterpolyol liable to be generated by reacting an acidic reagent (A) including at least one aliphatic or aromatic polyacid, with a first hydroxylated reagent (P2) consisting in at least one two functional polyol, and a second hydroxylated reagent (P3) consisting in at least one at least three functional polyol, **characterized by** the fact that the first hydroxylated reagent (P2) includes monoethyleneglycol and that the second hydroxylated reagent (P3) includes at least one at least three functional polyol oxyalkylenated with a C₂-C₄ alkylene oxide.

2. A polyesterpolyol according to Claim 1, **characterized by** the fact that the first hydroxylated reagent (P2) also includes at least one branched diol with the formula: 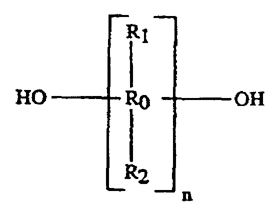 in which:
- R₀ represents, independently in each [R₁R₀R₂] unit, a carbon atom, a C₆ alicyclic radical, a phenyl radical or a heterocyclic radical containing four to six atoms, saturated or unsaturated, with the heteroatom being O or N;
- R₁ and R₂ represent, independently in each [R₁R₀R₂] unit and independently of one another, a hydrogen atom, a linear C₁-C₆ alkyl radical, a branched C₃-C₆ alkyl radical, a C₆ alicyclic radical, or an aryl radical;
- with the proviso that, if R₀ is not cyclic in any of the [R₁R₀R₂] units, R₁ and/or R₂ is other than H in at least one of the [R₁R₀R₂] units;
- n is an integer between 1 and 8 (inclusive), with the proviso that, if n is greater than 4, the total number of carbon atoms in all the radicals R₀, R₁ and R₂ taken together is greater than 8.

3. A polyesterpolyol according to Claim 2, **characterized by** the fact that the branched diol is selected from the group consisting of propanediol-1,2, methyl-2 propanediol-1,3, dimethyl-2,2 propanediol-1,3, ethyl-2 butyl-2 propanediol-1,3, trimethyl-2,2,4 hexanediol-1,6, trimethyl-2,2,4 pentanediol-1,3, butanediol-1,2 and butanediol-1,3, pentanediol-1,2, ethyl-2 hexanediol-1,3, methyl-2 octanediol-1,8, bisphenol A and bisphenol F.

4. A polyesterpolyol according to one of Claims 1 to 3, **characterized by** the fact that the hydroxylated reagent (P2) includes diethyleneglycol, said diethyleneglycol being present in a molar ratio of less than 20 % of the totality of the hydroxylated reagents (P2) and (P3).

5. A polyesterpolyol according to one of Claims 1 to 4, **characterized by** the fact that the acidic reagent (A) includes at least one diacid and at least one branched two or more functional acid.

6. A polyesterpolyol according to Claim 5, **characterized by** the fact that the acidic reagent (A) includes, as branched acid, at least one C₁₂-C₂₄ fatty acid dimer.

7. A polyesterpolyol according to Claim 6, **characterized by** the fact that the acidic reagent (A) includes, as branched acid, at least one C₁₈ fatty acid dimer.

8. A polyesterpolyol according to Claim 7, **characterized by** the fact that the acidic reagent (A) includes, as source of branched acid, a mixture of C₁₈ fatty acid monomer, dimer and trimer containing at least 70 % by weight of dimer.

9. A polyesterpolyol according to one of Claims 1 to 8, **characterized by** the fact that the acidic reagent (A) includes adipic acid and/or phthalic anhydride.

10. A polyesterpolyol according to one of Claims 1 to 9, **characterized by** the fact that the oxyalkylenated polyol is generated from a polyol selected from the group consisting of trimethylol ethane, trimethylol propane, ditrimethylol propane, pentaerythritol, dipentaerythritol, glycerol, triethanolamine, triisopropanolamine, hexanetriol-1,2,6, butanetriol-1,2,4 and tri(2-hydroxyethyl)isocyanurate.

11. A polyesterpolyol according to one of Claims 1 to 10, **characterized by** the fact that the oxyalkylenated polyol is generated by oxyalkylation using ethylene oxide and/or propylene oxide.

12. A polyesterpolyol according to one of Claims 1 to 11, **characterized by** the fact that the molar ratio of the second hydroxylated reagent (P3) to the first hydroxylated reagent (P2) is between 1/99 and 1/1.

13. A polyesterpolyol according to Claim 2, taken alone or in combination with one of Claims 3 to 11, **characterized by** the fact that the molar ratio of the branched diol(s) to the other polyol(s) of the first hydroxylated reagent (P2) is between 5/95 and 1/1.

14. A polyesterpolyol according to Claim 5, taken alone or in combination with one of Claims 2, 3 and 6 to 13, **characterized by** the fact that the molar ratio of the diacid(s) to the branched acid(s) is between 95/5 and 1/1.

15. A polyesterpolyol according to one of Claims 1 to 14, **characterized by** the fact that a polyalkylenated polyol of the second hydroxylated reagent (P3) has a number N of linked units of alkylene oxide(s) equal to fx, wherein f is the number of hydroxyl groups per mole of the polyol and x is a number between 1 and 10.

16. A polyurethane foam generated by reacting at least one polyisocyanate with at least one polyesterpolyol, **characterized by** the fact that it is obtained using at least one polyesterpolyol according to one of claims 1 to 15.

17. Use of a polyurethane foam according to Claim 16 for the production of components intended for use in the passager compartment of a motor vehicle.
